# EUROPÄISCHE PATENTSCHRIFT

(11) **EP 3 368 364 B1**
(45) Veröffentlichungstag und Bekanntmachung des Hinweises auf die Patenterteilung: **29.01.2020**
(21) Anmeldenummer: 16781422.7
(22) Anmeldetag: 13.10.2016
(51) Int. Cl.: B60K 15/03, B60K 15/077, F02M 37/00

(54) **KRAFTSTOFFBEHÄLTER MIT ZUSATZRESERVEVOLUMEN**
FUEL CONTAINER HAVING ADDITIONAL RESERVE VOLUME
RÉSERVOIR DE CARBURANT À VOLUME DE RÉSERVE ADDITIONNEL

(30) Priorität: 29.10.2015 DE 102015221225
(43) Veröffentlichungstag der Anmeldung: 05.09.2018
(73) Patentinhaber: TI Automotive Technology Center GmbH, 76437 Rastatt (DE)
(72) Erfinder: BOECKER, Albert, J., 76275 Ettlingen (DE); MICHAELIS, Gerrit, 76448 Durmersheim (DE); GRAUER, Peter, 76872 Steinweiler (DE); GMÜND, Patrick, 76149 Karlsruhe (DE); OLBRICH, Matthias, B., 76437 Rastatt (DE); EHLER, Alex, 76437 Rastatt (DE)
(74) Vertreter: Gauss, Nikolai
(86) Internationale Anmeldenummer: PCT/EP2016/074535
(87) Internationale Veröffentlichungsnummer: WO 2017/071960

(56) Entgegenhaltungen:
- EP-A2- 1 238 846
- JP-A- 2011 069 246
- US-A- 5 263 458

## Beschreibung

Die Erfindung betrifft einen Kraftstoffbehälter mit einem Modultopf, der ein erstes separates, innerhalb des Kraftstoffbehälters angeordnetes Kraftstoffreservoir für eine Kraftstoffpumpe bildet, und ein zweites separates, innerhalb des Kraftstoffbehälters getrennt von dem ersten Kraftstoffreservoir angeordnetes Kraftstoffreservoir für die Kraftstoffpumpe, aus dem zumindest bei Überschreiten eines vorbestimmten, auf den Kraftstoffbehälter wirkenden Beschleunigungswertes Kraftstoff in das erste Kraftstoffreservoir übertritt.

Das Dokument EP 1 238 846 A2 offenbart einen Kraftstoffbehälter mit einem Modultopf.

Moderne Kraftfahrzeuge verfügen über einen sogenannten Modultopf, der in dem Kraftstoffbehälter angeordnet ist. In dem Modultopf befindet sich eine Kraftstoffpumpe zur Versorgung des Motors mit Kraftstoff und der Modultopf bildet gleichzeitig ein vom umgebenden Innenraum des Kraftstoffbehälters separiertes Kraftstoffreservoir, das ein gewisses Reservevolumen an Kraftstoff aufnimmt, so dass beispielsweise Schwappbewegungen im übrigen Behältervolumen nicht zu einer Unterbrechung der Kraftstoffversorgung der Kraftstoffpumpe führen. Beim Betrieb eines Kraftfahrzeugs kann jedoch der Ausnahmefall eintreten, dass aufgrund eines niedrigen Kraftstoffpegels und gleichzeitiger andauernder Querbeschleunigung des Fahrzeugs die Kraftstoff innerhalb des Behälters zum Modultopf fördernde Saugstrahlpumpe trocken läuft und somit auch Gefahr besteht, dass die Kraftstoffpumpe trocken läuft, was zu Motoraussetzern oder Beschädigung der Kraftstoffpumpe führen kann. Zwar wäre es möglich, einen Modultopf mit einem größeren Volumen zu verwenden, dies hätte jedoch den Nachteil, dass das Herstellungsverfahren für den Kraftstoffbehälter geändert werden müsste, da ein größerer Modultopf nicht durch die standardisierte Behälteröffnung zum Einsetzen des Modultopfes passen würde.

Ausgehend hiervon besteht die Aufgabe der vorliegenden Erfindung darin, einen Kraftstoffbehälter derart zu gestalten, dass eine Versorgung der Kraftstoffpumpe selbst bei niedrigem Kraftstoffpegel und andauernder Längs- oder Querbschleunigung des Fahrzeugs gewährleistet ist.

Zur Lösung dieser Aufgabe wird die in Patentanspruch 1 angegebene Merkmalskombination vorgeschlagen. Vorteilhafte Ausgestaltungen und Weiterbildungen der Erfindung ergeben sich aus den abhängigen Ansprüchen.

Gemäß der Erfindung weist das zweite Kraftstoffreservoir eine nach unten geschlossene Kalottenpartie und eine mit dem oberen Randbereich der Kalottenpartie über einen Ringsteg verbundene Seitenwandpartie auf, wobei in dem Ringsteg mindestens eine Durchtrittsöffnung vorgesehen ist, von der aus eine Flüssigkeitsleitung zu dem ersten Kraftstoffreservoir führt. Die schalenartige Kalottenpartie ermöglicht bei konstanter Beschleunigung eine stetige Verdrängung des darin befindlichen Kraftstoffs, ohne plötzliches Schwappen oder dergleichen, zu mindestens einer in dem Ringsteg vorgesehenen Durchtrittsöffnung, von der aus eine Flüssigkeitsleitung zu dem ersten Kraftstoffreservoir führt. Vorteilhaft bildet der Ringsteg zwischen der Kalottenpartie und der Seitenwandpartie eine leicht vertiefte Rinne, in der Kraftstoff zu der mindestens einen Durchtrittsöffnung strömen kann. Die Seitenwandpartie sorgt dafür, dass der Kraftstoff nur über die mindestens eine Durchtrittsöffnung abfließen kann. Die Seitenwandpartie kann im Wesentlichen senkrecht angeordnet sein, sie kann aber auch nach innen geneigt oder mit einem Deckel versehen sein. Zweckmäßig ist das zweite Kraftstoffreservoir, zumindest dessen Ringsteg, oberhalb des ersten Kraftstoffreservoirs angeordnet, so dass der Kraftstoff durch Schwerkrafteinwirkung in das erste Kraftstoffreservoir abfließen kann.

Das erste und/oder das zweite Kraftstoffreservoir kann von mindestens einer in Bodennähe des Kraftstoffbehälters angeordneten Förderpumpe, vorzugsweise einer Saugstrahlpumpe, mit Kraftstoff befüllt werden. Bevorzugt sind zwei Saugstrahlpumpen vorgesehen, von denen je eine eines der Kraftstoffreservoire speist. Die Speisung beider Kraftstoffreservoire erfolgt während des normalen Betriebs ununterbrochen, wobei das zweite Kraftstoffreservoir dann einfach ständig kaskadenartig zum ersten Kraftstoffreservoir hin überläuft.

In vorteilhafter Ausgestaltung der Erfindung ist das zweite Kraftstoffreservoir an einem im Kraftstoffbehälter angeordneten Trägerkörper für Kraftstoffkomponenten angeordnet. Kraftstoffkomponenten können Ventile, Leitungen und dergleichen sein, die für den Betrieb eines modernen Kraftstoffbehälters erforderlich sind. Bei einem Herstellungsverfahren können derartige Kraftstoffkomponenten auf dem Träger vormontiert und dieser dann im Zuge eines Blasformverfahrens in den Behälter eingefügt werden, oder sie können direkt an einer Wandung des Behälters befestigt werden.

Entsprechend der vorrichtungsmäßigen Ausgestaltung des Kraftstoffbehälters weist ein Verfahren zur Versorgung einer in einem Kraftstoffbehälter in einem ersten separaten Kraftstoffreservoir angeordneten Kraftstoffpumpe mit Kraftstoff, wobei das erste separate Kraftstoffreservoir mittels einer ersten Förderpumpe fortlaufend mit Kraftstoff gespeist wird, die folgenden Schritte auf:
- Bereitstellen eines zweiten separaten Kraftstoffreservoirs, von dem aus eine Flüssigkeitsleitung zu dem ersten separaten Kraftstoffreservoir führt,
- fortlaufendes Befüllen des zweiten separaten Kraftstoffreservoirs mit Kraftstoff,
- Nutzung der Zentrifugalkraft zum Transport von Kraftstoff aus dem zweiten Kraftstoffreservoir in das erste Kraftstoffreservoir, wenn aufgrund eines niedrigen Kraftstoffpegels im Kraftstoffbehälter und gleichzeitiger andauernder Längs- oder Querbeschleunigung eines den Kraftstoffbehälter aufweisenden Fahrzeugs die Speisung des ersten separaten Kraftstoffreservoirs mittels der Förderpumpe unterbrochen ist.

Zum fortlaufenden Befüllen des zweiten separaten Kraftstoffreservoirs wird bevorzugt eine zweite Förderpumpe verwendet, wobei als erste und/oder zweite Förderpumpe eine Saugstrahlpumpe verwendet werden kann. Von der Kraftstoffpumpe verläuft eine Treibleitung zum Ansaugpunkt der zweiten Saugstrahlpumpe. Dort wird durch den Venturi-Effekt zusätzlicher Kraftstoff mitgerissen und gelangt über eine Leitung zu dem zweiten Kraftstoffreservoir. Der Ansaugpunkt kann sich beispielsweise in der Nebenkammer eines Satteltanks befinden, wobei sich der Modultopf mit der Kraftstoffpumpe'in der Hauptkammer des Tanks befindet.

Zweckmäßig wird das zweite separate Kraftstoffreservoir zumindest teilweise oberhalb des ersten separaten Kraftstoffreservoirs angeordnet, damit Kraftstoff durch Schwerkrafteinwirkung in das erste separate Kraftstoffreservoir abfließen kann.

Im Folgenden wird die Erfindung anhand eines in der Zeichnung in schematischer Weise dargestellten Ausführungsbeispiels näher erläutert. Es zeigen
- Fig. 1: eine perspektivische Ansicht eines aufgeschnittenen Kraftstoffbehälters; und
- Fig. 2: einen Querschnitt durch ein dem Kraftstoffbehälter angeordneten zweiten Kraftstoffreservoirs.

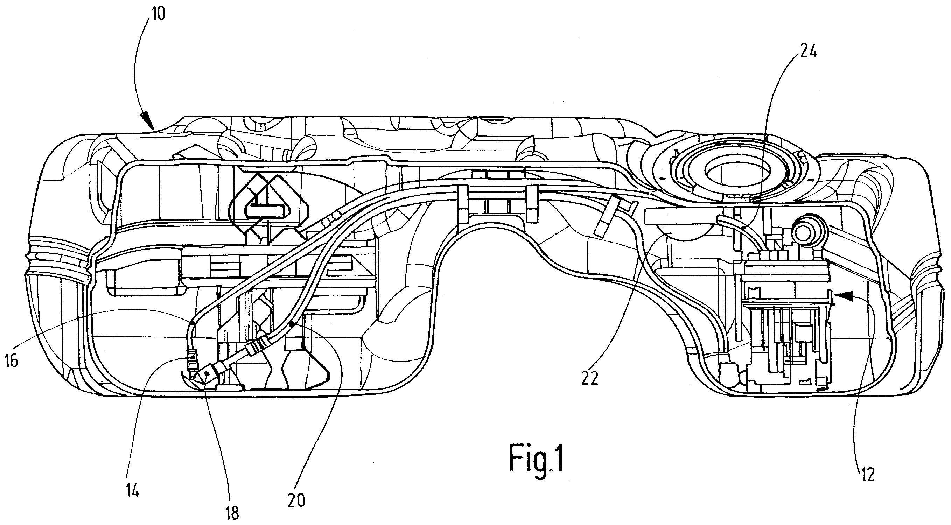

Der in Fig. 1 dargestellte Kraftstoffbehälter 10 enthält einen Modultopf 12, in dem eine Kraftstoffpumpe zur Versorgung eines Motors mit Kraftstoff angeordnet ist. Der Modultopf bildet ein erstes, vom übrigen Behältervolumen separiertes Kraftstoffreservoir 12 mit einem Kraftstoffvorrat von typischerweise etwa 0,5 bis 0,7 l. Von dem Modultopf führt eine Treibleitung 16, die von der Kraftstoffpumpe gespeist wird, in eine Nebenkammer des als Satteltank ausgebildeten Kraftstoffbehälters 10 und nimmt dort über eine Saugstrahlpumpe 14, 18 zusätzlichen Kraftstoff mit. Der Summenstrom wird über eine weitere Leitung 20 einem zweiten separaten Kraftstoffreservoir 22 zugeführt. Die Saugstrahlpumpe 14, 18 fördert im normalen Fahrzeugbetrieb ununterbrochen. Im Normalbetrieb ist das Kraftstoffreservoir 22 ständig gefüllt und überschüssiger Kraftstoff fließt über eine weitere Leitung 24 ab, die einen oberen Bereich des zweiten Kraftstoffreservoirs 22 mit dem ersten Kraftstoffreservoir 12 verbindet.

Bei einem geringen Kraftstoffpegel im Kraftstoffbehälter 10 und längerer Längs- oder Querbeschleunigung kann es vorkommen, dass der vorhandene Kraftstoff von der Ansaugstelle der Saugstrahlpumpe 14, 18 verdrängt wird, so dass diese keinen Kraftstoff mehr fördert. In diesem Fall bewirkt die Beschleunigung jedoch auch, dass der in dem zweiten Kraftstoffreservoir 22 vorhandene Kraftstoff in den Bereich der Ablaufstelle verdrängt wird und so über die Leitung 24 zum ersten Kraftstoffreservoir gelangt und so die Förderlücke überbrückt.

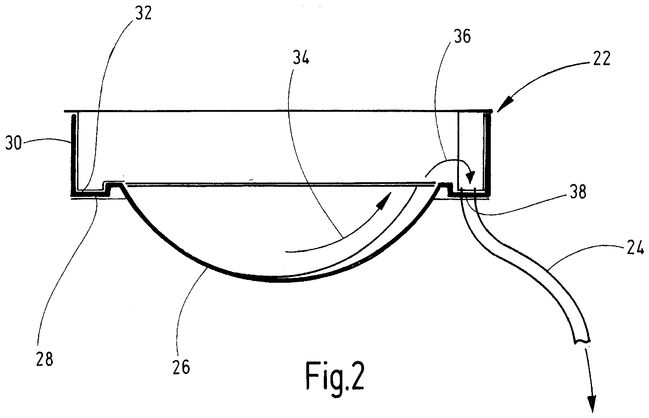

Das zweite Kraftstoffreservoir 22 ist in Fig. 2 näher dargestellt. Es besteht im Wesentlichen aus einer Kalottenpartie 26, an deren oberen Randbereich ein Ringsteg 28 leicht nach unten versetzt anschließt. An den Außenumfang des Ringstegs 28 schließt eine Seitenwandpartie 30 im Wesentlichen senkrecht an, so dass zwischen dem oberen Begrenzungsrand der Kalottenpartie 26 und der Seitenwandpartie 30 eine flache Rinne 32 gebildet ist. Bei entsprechender Beschleunigung strömt der in der Kalottenpartie 26 vorhandene Kraftstoff beispielsweise wie durch die Pfeile 34, 36 angedeutet in die Rinne 32 und von dort durch eine Durchtrittsöffnung 38 und die Leitung 24 zu dem ersten Kraftstoffreservoir 12.

Zusammenfassend ist folgendes festzuhalten: Die Erfindung betrifft einen Kraftstoffbehälter 10 mit einem Modultopf, der ein erstes separates, innerhalb des Kraftstoffbehälters 10 angeordnetes Kraftstoffreservoir 12 für eine Kraftstoffpumpe bildet. Um bei bestimmten Betriebszuständen, insbesondere bei andauernder Querbeschleunigung, eine Förderlücke in der Kraftstoffversorgung des ersten Kraftstoffreservoirs 12 zu vermeiden, wird gemäß der Erfindung ein zweites separates, innerhalb des Kraftstoffbehälters 10 getrennt von dem ersten Kraftstoffreservoir 12 angeordnetes Kraftstoffreservoir 22 für die Kraftstoffpumpe vorgeschlagen, aus dem zumindest bei Überschreiten eines vorbestimmten, auf den Kraftstoffbehälter 10 wirkenden Beschleunigungswertes Kraftstoff in das erste Kraftstoffreservoir 12 übertritt.

## Patentansprüche

1. Kraftstoffbehälter (10) mit einem Modultopf, der ein erstes separates, innerhalb des Kraftstoffbehälters (10) angeordnetes Kraftstoffreservoir (12) für eine Kraftstoffpumpe bildet, und ein zweites separates, innerhalb des Kraftstoffbehälters (10) getrennt von dem ersten Kraftstoffreservoir (12) angeordnetes Kraftstoffreservoir (22) für die Kraftstoffpumpe, aus dem zumindest bei Überschreiten eines vorbestimmten, auf den Kraftstoffbehälter (10) wirkenden Beschleunigungswertes Kraftstoff in das erste Kraftstoffreservoir (12) übertritt, wobei das zweite Kraftstoffreservoir (22) eine nach unten geschlossene Kalottenpartie (26) und eine mit dem oberen Randbereich der Kalottenpartie (26) über einen Ringsteg (28) verbundene Seitenwandpartie (30) aufweist, **dadurch gekennzeichnet, dass** in dem Ringsteg (28) mindestens eine Durchtrittsöffnung (38) vorgesehen ist, von der aus eine Flüssigkeitsleitung (24) zu dem ersten Kraftstoffreservoir (12) führt.

2. Kraftstoffbehälter (10) nach Anspruch 1, **dadurch gekennzeichnet, dass** das erste und/oder das zweite Kraftstoffreservoir (12, 22) von mindestens einer in Bodennähe des Kraftstoffbehälters (10) angeordneten Förderpumpe (14, 18), vorzugsweise einer Saugstrahlpumpe, mit Kraftstoff befüllt wird.

3. Kraftstoffbehälter (10) nach Anspruch 1 oder 2, **dadurch gekennzeichnet, dass** das zweite Kraftstoffreservoir (22), zumindest dessen Ringsteg (28), oberhalb des ersten Kraftstoffreservoirs (12) angeordnet ist.

4. Kraftstoffbehälter (10) nach einem der Ansprüche 1 bis 3, **dadurch gekennzeichnet, dass** eine als Saugstrahlpumpe ausgebildete Förderpumpe (14, 18) in dem Kraftstoffbehälter (10) angeordnet ist, die Kraftstoff zu dem zweiten Kraftstoffreservoir (22) fördert.

5. Kraftstoffbehälter (10) nach einem der Ansprüche 1 bis 4, **dadurch gekennzeichnet, dass** das zweite Kraftstoffreservoir (22) an einem im Kraftstoffbehälter (10) angeordneten Trägerkörper für Kraftstoffkomponenten angeordnet ist.

## Claims

1. Fuel tank (10) comprising a module pot which forms a first separate fuel reservoir (12) which is provided for a fuel pump and is arranged within the fuel tank (10) and a second separate fuel reservoir (22) which is provided for the fuel pump and is arranged within the fuel tank (10) so as to be separate from the first fuel reservoir (12), and from which fuel is transferred into the first fuel reservoir (12) at least when a predetermined acceleration value acting on the fuel tank (10) is exceeded, the second fuel reservoir (22) having a dome portion (26) that is closed at the bottom and a side wall portion (30) that is connected to the upper edge region of the dome portion (26) by means of an annular connecting piece (28), **characterized in that** at least one passage opening (38) is provided in the annular connecting piece (28), from which opening a liquid line (24) leads to the first fuel reservoir (12).

2. Fuel tank (10) according to claim 1, **characterized in that** the first and/or the second fuel reservoir (12, 22) is filled with fuel by at least one feed pump (14, 18), preferably a suction jet pump, arranged near the bottom of the fuel tank (10).

3. Fuel tank (10) according to either claim 1 or claim 2, **characterized in that** the second fuel reservoir (22), at least the annular connecting piece (28) thereof, is arranged above the first fuel reservoir (12).

4. Fuel tank (10) according to any of claims 1 to 3, **characterized in that** a feed pump (14, 18), which is designed as a suction jet pump, is arranged in the fuel tank (10) and feeds fuel to the second fuel reservoir (22).

5. Fuel tank (10) according to any of claims 1 to 4, **characterized in that** the second fuel reservoir (22) is arranged on a carrier body for fuel components which is arranged in the fuel tank (10).

## Revendications

1. Réservoir de carburant (10) comprenant un contenant modulaire formant un premier bac de réserve de carburant (12) séparé, disposé à l'intérieur du réservoir de carburant (10) pour une pompe à carburant et un second bac de réserve de carburant (22) séparé, disposé à l'intérieur du réservoir de carburant (10) séparé du premier bac de réserve de carburant (12) pour la pompe à carburant, à partir duquel, au moins en cas de dépassement d'une valeur d'accélération définie à laquelle le réservoir de carburant (10) est soumis, le carburant est transféré dans le premier bac de réserve de carburant (12), le second bac de réserve de carburant (22) comportant une partie en forme de calotte fermée vers le bas (26) et une partie de paroi latérale (30) reliée par une nervure annulaire (28) à la zone de bord supérieure de la partie en forme de calotte (26), **caractérisé en ce que** la nervure annulaire (28) est pourvue d'au moins une ouverture de passage (38) à partir de laquelle une conduite de liquide (24) mène au premier bac de réserve de carburant (12).

2. Réservoir de carburant (10) selon la revendication 1, **caractérisé en ce que** le premier et/ou le second bac de réserve de carburant (12, 22) d'au moins une pompe d'alimentation (14, 18) se trouvant près du fond du réservoir de carburant (10), de préférence une pompe à jet aspirant, est rempli de carburant.

3. Réservoir de carburant (10) selon la revendication 1 ou 2, **caractérisé en ce que** le second bac de réserve de carburant (22), au moins sa nervure annulaire (28), est disposé au-dessus du premier bac de réserve de carburant (12).

4. Réservoir de carburant (10) selon l'une des revendications 1 à 3, **caractérisé en ce qu'**une pompe d'alimentation (14, 18) réalisée sous la forme d'une pompe à jet aspirant est disposée dans le réservoir de carburant (10) et achemine le carburant vers le second bac de réserve de carburant (22).

5. Réservoir de carburant (10) selon l'une des revendications 1 à 4, **caractérisé en ce que** le second bac de réserve de carburant (22) est disposé au niveau d'un corps de support se trouvant dans le réservoir de carburant (10) pour les composants de carburant.
